Europäisches Patentamt

European Patent Office

Office européen des brevets

(19)

(11) Publication number:  **0 094 799**
**A1**

(12) **EUROPEAN PATENT APPLICATION**

(21) Application number: **83302703.0**

(22) Date of filing: **12.05.83**

(51) Int. Cl.³: **F 16 L 33/02**
**F 16 B 2/08**

(30) Priority: **19.05.82 US 379596**

(43) Date of publication of application:
**23.11.83 Bulletin 83/47**

(84) Designated Contracting States:
**DE FR GB**

(71) Applicant: **PARKER HANNIFIN CORPORATION**
**17325 Euclid Avenue**
**Cleveland Ohio 44112(US)**

(72) Inventor: **Kern, Peter W.**
**78-28 78th Street**
**Glendale New York 11385(US)**

(72) Inventor: **Richter, James J.**
**34-44 82nd Street**
**Jackson Heights Queens New York 11372(US)**

(74) Representative: **Thomas, Roger Tamlyn et al,**
**D. Young & Co. 10 Staple Inn**
**London WC1V 7RD(GB)**

(54) **Crimp-type hose clamp.**

(57) A crimp-type hose clamp wherein the ends of the clamp are joined in a double-layered top portion of the hat section of the clamp.

Fig. I

CRIMP-TYPE CLAMP

TITLE MODIFIED
see front page

## Field of the Invention

The subject invention is directed to hose clamps and, more particularly, hose clamps that are secured by means of a crimping device.

## Description of the Prior Art

For many years, clamps and bands have been made for a broad range of purposes. Many types and styles of such clamps have been developed with particular regard to securing flexible hose. Examples are shown in U.S. Patents RE 9,041 and 2,163,048. Among these types are crimp-type clamps which are secured to the hose by crimping an extended portion or "hat" of the clamp with a crimping tool. Examples of such clamps are shown in U.S. Patents 4,222,155; 3,295,176; 3,286,314; 3,082,498; 3,602,954; 3,020,631; RE 25,769; 3,523,337; and 3,402,436.

Crimp-type clamps are best suited for light duty applications that do not require the performance afforded by more elaborate types of clamps such as screw-type clamps. Some types of crimp-type clamps developed in the prior art are relatively complex and, therefore, somewhat difficult and expensive to manufacture.

0094799

Generally, to limit manufacturing costs, crimp-type clamps are usually formed from a strip of flat stock with the ends of the stock being welded or mechanically coupled in an overlapped arrangement at some point along the sealing surface. However, such arrangements incorporate discontinuities in the sealing surface and provide irregular and low sealing pressure along the sealing surface at a location remote from the crimped portion. Thus, such prior art clamps establish a potential for fluid leakage within a zone of the sealing surface that is remote from the crimped portion. Accordingly, there was a need for a crimp-type sealing clamp that avoided such low-pressure zones along the sealing surface where there was a higher potential for leakage.

Prior art crimp-type clamps also had a zone of relatively low sealing pressure adjacent the ends of the sealing surface that were connected to the hat portion. This zone of low pressure was due to the relatively weak tangential force applied to the ends of the sealing surface by the crimped extended portion. In attempting to overcome this problem, a special crimping tool was developed that would support the top portion of the crimping section so that the top portion would not buckle during the crimping process. However, the crimp-type clamps requiring this special type of crimping tool could not be used with the standard crimping tool. This required users of crimp-type clamps to have both types of crimping tools or, alternatively, to limit themselves to the use of only one type of clamp. Preferably, therefore, the crimp-type clamp having the continuous sealing surface between the hat portion should be compatible with either type of crimping tool.

- 3 -  **0094799**

## SUMMARY OF THE INVENTION

As hereinafter described in detail, a crimp-type hose clamp provides a continuous seal between the ends of a hat section. To provide the continuous sealing surface, the ends of the strip that forms the clamp are connected to form the top portion of the hat section. Preferably, the ends of the strip are overlapped by and butted against each other such that they are compatible with either style of crimping tool. Also preferably, the ends are connected together by a cooperating tab and slot arrangement. Alternatively, they can be welded or fastened together with a suitable bonding agent.

## BRIEF DESCRIPTION OF THE DRAWINGS

The accompanying drawings show a presently preferred embodiment of the invention wherein:

Figure 1 is a perspective view of a hose clamp embodying the present invention;

Figure 2 is a partial elevational view of the clamp shown in Figure 1 taken along the lines II-II of Figure 1.

Figure 3 is a partial cross-sectional view of the clamp shown in Figure 1 taken along the lines III-III in Figure 1.

Figure 4 is a plan view of the unassembled strip that forms the hose clamp herein disclosed.

Figure 5 is a partial elevational view of the assembled strip of Figure 4 showing the hat portion in its assembled, unpressed state.

Figure 6 is a partial cross-section of the assembled strip of Figure 4 showing the hat portion in its assembled, unpressed state.

Figures 7, 8 and 9 are elevational views of the hat portions of three alternative embodiments of the clamp shown in Figures 1-3.

## DESCRIPTION OF THE PREFERRED EMBODIMENT

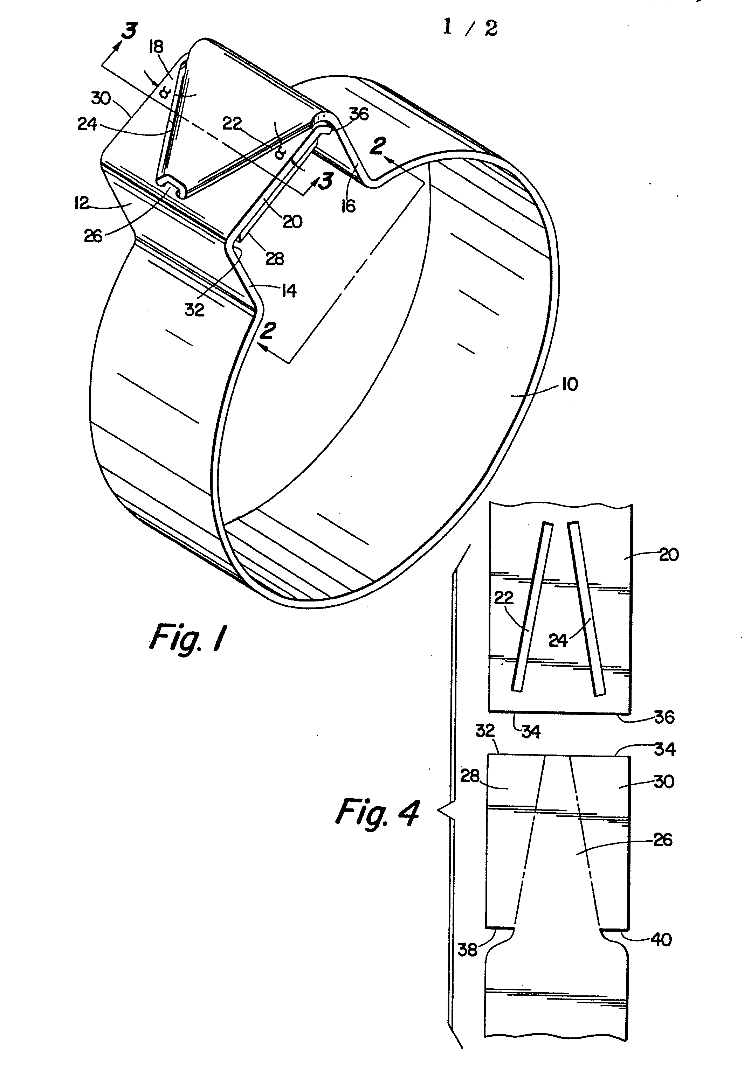

Figures 1-3 show a hose clamp according to the subject invention wherein a metal strip is formed in a continuous c-shaped clamping surface 10 and the ends of the metal strip are interlocked in a double-layered hat section 12. Double-layered hat section 12 includes offset sections 14 and 16 that are connected to the ends of clamping surface 10. Also included in hat section 12 is a double-layered top section 18 having opposite ends connected to one of the offset sections 14 or 16.

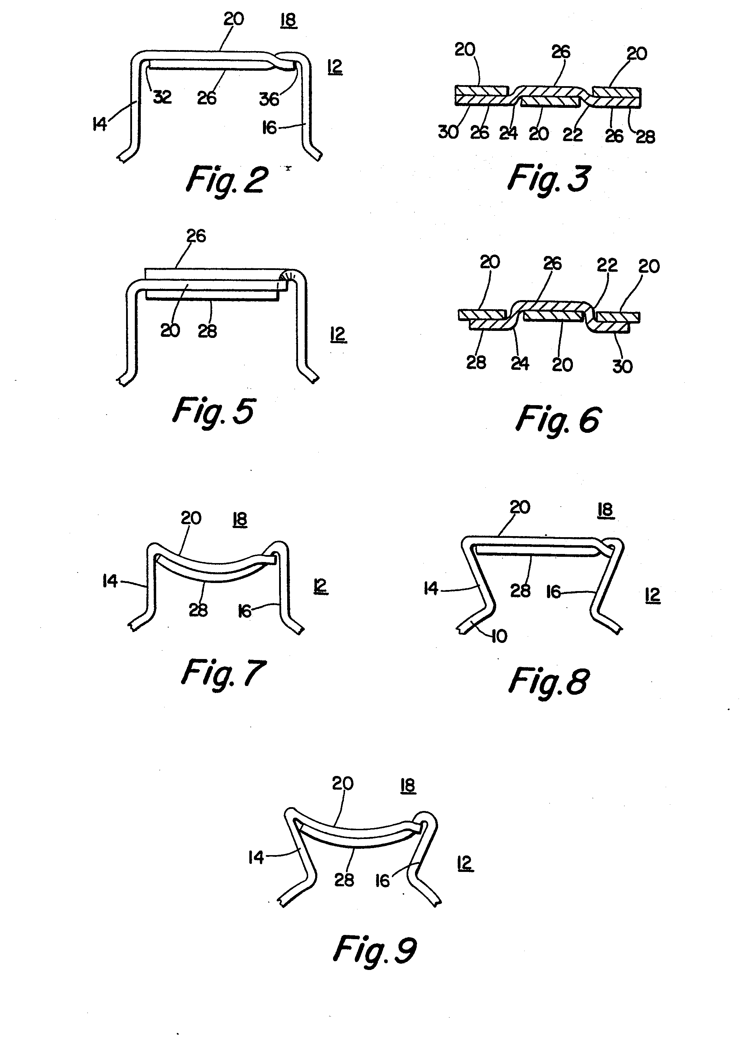

As shown more particularly in Figures 2 and 3, double-layered top section 18 includes a first layer 20 provided with obliquely aligned slots 22 and 24, and a second layer 26 provided with tabs 28 and 30 located in registry with slots 22 and 24 and detented so that first and second layers 20 and 26 are interleaved in a double layer structure with tabs 28 and 30 interfacing with first layer 20 on one side and the remaining portion of layer 26 interfacing with first layer 20 on the opposite side.

To provide increased rigidity in the corners of hat section 12, first and second layers 20 and 26 are sized such that end portions 32 and 34 of tabs 28 and 30 are in contact with or closely adjacent the internal face of offset section 14 and the end portion 36 of layer 20 is in contact with or closely adjacent the face of offset section 16. The increased rigidity of the double-layered hat section 12 makes the presently disclosed crimp-type hose clamp compatible with any commonly available style of crimping tool.

The diagonal angle $\alpha$ of slots 22 and 24 and tabs 28 and 30 in top section 18 is such that end portions 32 and 34 and end portion 36 extend over a substantial portion of the width of the clamp. Thus, during the crimping operation, end portions 32, 34 and 36 distribute the compression load of the crimping force over substantially the entire width of the clamp.

The manufacture of the crimp-type clamp herein disclosed is explained with particular reference to Figures 4-6. Preferably, the clamp is cold-formed from a metal strip having shaped ends such as shown, for example, in Figure 4. The first end of the metal strip of Figure 4 is provided with obliquely arranged slots 22 and 24 at one end. The second end of the strip is provided with lateral cuts 38 and 40 that are recessed from ends 32 and 34 in correspondence with the distal ends of slots 22 and 24 from end 36. Preferably, the second end of the strip is joggled adjacent lateral cuts 38 and 40. The metal strip is then cold-formed to provide the continuous c-shaped sealing section 10 and the hat section 12. Specifically, the first and second ends of the strip are joined to form double-layered top section 18 of hat section 12 by bending the corner portions of the second end of the strip to form tabs 28 and 30 and inserting tabs 28 and 30 through slots 22 and 24 in the first end of the strip. The first and second ends of the strip are then detented by folding tabs 28 and 30 back against the first end of the strip to form a three-layered top section as shown in Figures 5 and 6. The three-layered top section is then placed in a press and compressed into two-layered top section 18 shown in Figures 1-3 wherein top section 18 has a thickness that is substantially equal to twice the thickness of the metal strip. In addition to the additional strength provided by the interleaved double-layer structure of top section 18, the cold forming processing technique provides double-layered top section 18 with additional metallurgical strength to resist buckling during the crimping operation.

Figures 7, 8 and 9 show alternative embodiments of the hat section of the crimp-type clamp herein disclosed. In Figure 7, top section 18 is provided with a concave curvature such that the top section further resists buckling during the crimping operation. In the hat section shown in Figure 8, offset sections 14 and 16 are located in non-parallel relation such that they converge toward each other adjacent the junctions between sections 14 and 16 and clamping surface 10. It has been found that the arrangement shown in Figure 8 wherein the respective ends of sections 14 and 16 adjacent clamping surface 10 are closer than the respective ends of sections 14 and 16 adjacent top section 18 also provides further resistance to buckling of top section 18 during crimping. Figure 9 shows another embodiment of the disclosed hat section that incorporated both the advantages of the concave clamping surface shown in Figure 7 and the advantages of the converging offset sections shown in Figure 8.

CLAIMS

**0094799**

1. A hose clamp comprising:

a c-shaped sealing section that provides a seamless, continuous clamping surface between the ends thereof;

offset sections connected to the ends of said c-ring portion; and

a double-layered top section connected to the opposite ends of said offset sections, said double-layered top section including one layer that has two slots and a second layer having tabs that extend through said slots.

2. The crimp-type hose clamp of claim 1 wherein one side of the first layer is adjacent the tabs and the other side of the first layer is adjacent the remainder of the second layer.

3. The crimp-type hose clamp of claim 2 wherein said slots are obliquely arranged in said first layer.

4. The hose clamp of claim 3 wherein the end portions of the tabs of the second layer abut one of the offset sections and the end portion of the first layer abuts the other of the offset sections.

5. The hose clamp of claim 4 wherein said slots are arranged so that the end portions of the tabs and the end portion of the first layer extend over a substantial portion of the width of the sealing section.

6. A hose clamp for gripping and securing hose, said hose clamp comprising:

a continuous curvelinear band,

offset portions that are connected to opposite ends of said curvelinear band;

a slotted top end that is connected to one of said offset portions; and

a mating top end having tabs that are in registry with the slots of said slotted top end, said mating top end cooperating with said slotted top end to provide a double wall connection of the slotted top end with the mating top end.

7. A crimp-type hose clamp comprising:

a sealing section that provides a continuous, seamless clamping surface between its extreme ends;

first and second crimp sections that are connected to opposite ends of said sealing section; and

a top section that is connected at one end to said first crimp section and at the other end to said second crimp section.

8. A hose clamp comprising:

a continuous curvelinear band; and

a hat structure that is connected to opposite ends of said curvelinear band, said hat structure including first and second side sections and a double-layered top portion that bridges between said first and second side sections and is located radially outwardly from said curvelinear band.

Fig. 1

Fig. 4

Fig. 2

Fig. 3

Fig. 5

Fig. 6

Fig. 7

Fig. 8

Fig. 9

## European Patent Office

## EUROPEAN SEARCH REPORT

| | DOCUMENTS CONSIDERED TO BE RELEVANT | | EP 83302703.0 |

| Category | Citation of document with indication, where appropriate, of relevant passages | Relevant to claim | CLASSIFICATION OF THE APPLICATION (Int. Cl. ³) |
|---|---|---|---|
| P,A | <u>EP - A1 - 0 055 448</u> (GÖRG HELMUT)<br>* Fig. 1, 4-6 * | 1,6,8, | F 16 L 33/02<br>F 16 B 2/08 |
| A | <u>DE - B - 1 675 703</u> (A. TEVES GMBH)<br>* Totality * | 1,6,8 | |
| A | <u>GB - A - 2 038 403</u> (WEBCO)<br>* Totality * | 1,6,8 | |

----

**TECHNICAL FIELDS SEARCHED (Int. Cl. ³)**

F 16 L 33/00

F 16 B 2/00

The present search report has been drawn up for all claims

| Place of search<br>VIENNA | Date of completion of the search<br>15-07-1983 | Examiner<br>SCHUGANICH |
|---|---|---|

EPO Form 1503 03.82